# EUROPEAN PATENT APPLICATION

(11) **EP 1 947 167 A1**
(43) Date of publication of application: **23.07.2008**
(21) Application number: 07124172.3
(22) Date of filing: 29.12.2007
(51) Int. Cl.: C11D 1/62, C11D 3/00, C11D 3/12, C11D 3/384, C11D 3/40, C11D 3/50, A01N 59/16

(54) **Fabric softening compositions**

(30) Priority: 30.12.2006 PL 38145206
(71) Applicant: NANOCO Sp. z.o.o., 42-600 Tarnoskie Góry (PL)
(72) Inventor: Balcer, Magdalena, 42-606, Tarnowskie Góry (PL); Radola, Rafal, 41-902, Bytom (PL); Stoklosa, Witold, 44-230, Czerwionka Leszczyny (PL)
(74) Representative: Korga, Leokadia

(57) **Abstract**

The subject of invention are the fabric softening compositions to be used above all for rinsing the textile articles, for conditioning the fabrics in household, wash-houses and textile factories. Fabric softening compositions containing 5 - 60% weight anti-static product, 0.5 - 5% weight refining products, 1 - 5% weight perfume compositions, 0.01 - 0.1% weight colorants 1 up to 10000ppm metal nanoparticles and water in the amount completing up to 100% weight. It is advantageous that the metal nanoparticles is silver.

It is advantageous that silver nanoparticles are micro-biologically active silver compounds.

## Description

The subject of invention are the fabric softening compositions to be used above all for rinsing the textile articles, for conditioning the fabrics in household, wash-houses and textile factories.

Fabric softening compositions added during rinsing are commonly known and used during the rinse cycle in the laundering process.

In typical compositions for rinsing fabrics, the anti-static that is the softening product is the soluble in water Esterqut solution.

These compositions, containing up to about 10% of the anti-static product are included in the group of diluted liquids, and containing from 10% to 50% of the anti-static product are regarded concentrates.

Typical compositions used for fabric softening additionally contain refining products, synthetic preservative products, perfume compositions and colorants.

From the Polish patent description PL 170236 is also known the product for fabric softening containing additionally non-ion stabilizing substances.

It is also known from application description no P-351748 fabric softening composition containing cationic product for softening fabrics and emulsified silicon.

Fabric softening compositions containing 5 - 60% weight anti-static product, 0.5 - 5% weight refining products, 1 - 5% weight perfume compositions, 0.01 - 0.1% weight colorants, and water in the amount completing up to 100% weight according to the invention is characterized by that it contains from 1 up to 10000ppm metal nanoparticles. It is advantageous that the metal nanoparticles is silver.

It is advantageous that silver nanoparticles are micro-biologically active silver compounds.

It is advantageous that the silver nanoparticles is the preparation containing 0.005 - 50 weight parts of the soluble in the environment Polar silver salt solvents, 0.005 - 50 weight parts of ammonium nitrate and compounds containing amino group, 5 - 20 weight parts of the stabilizing substances in form of octylododecanol and chosen from the group of alcohols containing vinyl group, 0.02 - 5 weight parts of nitric acid and 0.001 - 0.5 weight parts of non-ion detergent.

It is advantageous that the metal nanoparticles is gold.

It is advantageous that gold nanoparticles are microbiologically active gold compounds.

It is advantageous that the metal nanoparticles is copper.

It is advantageous that the metal nano-molecules is zinc

It is advantageous that copper nanoparticles are microbiologically active copper compounds.

It is advantageous that zinc nanoparticles are microbiologically active zinc compounds.

It is advantageous that the metal nanoparticles is titanium dioxide.

It is advantageous that titanium nano-molecules are microbiologically active titanium compounds.

It is advantageous that the refining product are the silk proteins.

It is also advantageous that the fabric softening composition contain the cashmere proteins.

The basic advantage of the invention is the use of the bactericidal qualities of metals. Introducing microbiologically active compounds in nano-metric form guarantees lasting bactericidal and fungicidal effect of the fabric softening compositions.

The utilization of the metal nanoparticles in the compositions unexpectedly influenced the increase of the compositions' durability and in the process eliminated the necessity of the use of the synthetic preservative products. It has undoubted positive influence on the protection of the environment.

Combating the bacteria in the fabric prevents in this way the process of sweat decomposition. The deodorizing effect which prevents the lasting smell of sweat on the fabric and thus improves the comfort of wearing the clothing is also essential.

The bactericidal character of the composition ensures the prolongation of the use of the clothing as it eliminates the burdensome smell of sweat and in this way prolongs the periods between laundering.

The use of the composition according to the invention increases the exploitation durability of fabrics, which is especially important in tropical climates, where the warmth and humidity cause accelerated consumption of fabrics.

Below the invention is illustrated by unlimited examples. In the examples below all percentage contents are given in weight.

### Example I

Fabric softening compositions in the form of diluted liquid consist of 7% Esterqut solution, 0.5% silk proteins and 1% perfume composition, and 0.01% colorants. The composition also contains 20ppm nanoparticles silver preparation with trade name Nano-Silver and water in the amount completing up to 100%. As perfume compositions it can be selected from optional perfume products compatible with the composition depending on the concretely made scent. Also the used colorants depend on expected color of the fabric softener.

### Example II

Fabric softening compositions in the form of concentrate consist of 50% Esterqut solution, 4% cashmere protein and 5% perfume composition, and 0.1% weight colorants. The composition also contains 1000ppm nanoparticles silver preparation with trade name Nano-Silver and water in the amount completing up to 100%. As perfume compositions it can be selected from optional perfume products compatible with the composition depending on the concretely made scent. Also the used colorants depend on expected color of the fabric softener.

### Example III

Fabric softening compositions in the form of diluted liquid consist of 7% Esterqut solution, 0.5% lanolin and 1% scent/perfume composition and 0.01% colorants. The composition also contains 25ppm nanoparticles titanium dioxide and water in the amount completing up to 100%. As perfume compositions it can be selected from optional perfume products compatible with the composition depending on the concretely made scent. Also the used colorants depend on expected color of the fabric softener.

## Claims

1. Fabric softening compositions containing 5 - 60% weight anti-static product, 0.5 - 5% weight refining products, 1 - 5% weight perfume compositions, 0.01 -0.1% weight colorants and water in the amount completing up to 100% weight, **characterized by** that it contains from 1 to 10000ppm metal nanoparticles.

2. Fabric softening compositions according to claim 1, **characterized in that** metal nanoparticles is silver.

3. Fabric softening compositions according to claim 2, **characterized in that** silver nanoparticles are microbiologically active silver compounds.

4. Fabric softening compositions according to claim 3, **characterized in that** silver nanoparticles is the preparation containing 0.005 - 50 weight parts of the soluble in the environment Polar silver salt solvents, 0.005 - 50 weight parts of ammonium nitrate and compounds containing amino group, 5-20 weight parts of the stabilizing substances in form of octylododecanol and chosen from the group of alcohols containing vinyl group, 0.02 - 5 weight parts of nitric acid, and 0.001 - 0.5 weight parts of non-ion detergent.

5. Fabric softening compositions according to claim 1, **characterized in that** metal nanoparticles is gold.

6. Fabric softening compositions according to claim 5, **characterized in that** gold nanoparticles are microbiologically active gold compounds.

7. Fabric softening compositions according to claim 1, **characterized in that** metal nanoparticles is copper.

8. Fabric softening compositions according to claim 7, **characterized in that** copper nanoparticles are microbiologically active copper compounds.

9. Fabric softening compositions according to claim 1, **characterized in that** metal nano-molecules is zinc.

10. Fabric softening compositions according to claim 9, **characterized in that** zinc nanoparticles are microbiologically active zinc compounds.

11. Fabric softening compositions according to claim 1, **characterized in that** metal nanoparticles is titanium dioxide.

12. Fabric softening compositions according to claim 11, **characterized in that** titanium nano-molecules are microbiologically active titanium compounds.

13. Fabric softening compositions according to claim 1, **characterized in that** refining product are the silk proteins.

14. Fabric softening compositions according to claim 1, **characterized in that** refining product are the cashmere proteins.
